# EUROPEAN PATENT APPLICATION

(11) **EP 2 000 065 A1**
(43) Date of publication of application: **10.12.2008**
(21) Application number: 07109616.8
(22) Date of filing: 05.06.2007
(51) Int. Cl.: A47J 31/40

(54) **Device and method for producing a beverage by mixing soluble ingredients and a diluent**

(71) Applicant: Nestec S.A., 1800 Vevey (CH)
(72) Inventor: Thuliez, Jean-Luc, 2525 Le Landeron (CH); Kissling, Iwan, 2505 Bienne (CH)
(74) Representative: Rupp, Christian

(57) **Abstract**

A device for mixing a soluble food or beverage ingredient and a diluent comprises:
- a mixing chamber (13) (13) having an inlet (17) for the ingredient, an inlet (18) for the diluent and an outlet (20) for the beverage or comestible food resulting from the mixing of the ingredient with the diluent,
- a reservoir (3) for the ingredient, the reservoir (3) being connected to the mixing chamber (13) via an ingredient flow path, and
- air stream generating means designed for generating an stream of air from outside the mixing device and crossing the ingredient flow path,
the air stream generating means comprising means for generating a low pressure zone (101) above the ingredient inlet opening (17).

## Description

The invention relates to a device for producing a beverage by mixing soluble ingredients with a diluent.

Beverage production apparatuses exist for producing beverage liquids that utilize a diluent for dissolving a soluble ingredient such as coffee powder.

For instance, patent applications WO 03/068039 and EP 1639924 relate to rotary mechanical solutions to produce a beverage from a mixture of soluble ingredients and a diluent.

It has turned out that dosing of coffee powder (especially when non-agglomerated) in a mixing chamber is difficult because coffee powder is very hygroscopic. Therefore, during dosing in the mixing chamber, the powder tends to stick on surfaces when the powder falls from a reservoir through a funnel and into the mixing chamber. This results in a part of the powder messing the device and in inaccurate dosing because part of the coffee powder remains on the surfaces.

This disadvantage is the more important when an open mixing chamber is used for receiving the coffee dose from above via a powder dosing system and the mixing of the powder and water is carried out by water jets entering the chamber with high velocity. In this example there is no mechanical mixer in the chamber and the mixing is the result of the hydraulic swirl created in the mixing chamber. As a result, powder must fall correctly on the bottom of the mixing chamber where it mixes with the injected water. If the mixing chamber is too humid, the ingredient powder tends to stick on the surfaces of the mixing chamber, and it creates mess and dosing issues.

Thus there is a need to keep the mixing chamber dry and/or to evacuate humidity from the mixing chamber.

US 2,755,000 proposes an air blower generating an air stream which, in its first section is coaxial to the vertically dropping ingredient powder and which air flow then traverses the upper opening of a mixing bowl for mixing the ingredient and hot water fed from an inlet. In view of a removal of steam or humidity from the interior of the mixing bowl there is the disadvantage that the air flow arrives vertically at the upper opening of the mixing bowl.

The present invention targets at an improved drying technique for a mixing device for dry ingredients with a diluent.

This object is achieved by means of the features of the independent claims. The dependent claims develop further the central idea of the present invention.

According to a first aspect of the invention a device for mixing a soluble food or beverage ingredient and a diluent is proposed. The device comprises
- a mixing chamber having an inlet opening for the ingredient, an inlet for the diluent and an outlet for the beverage or comestible food resulting from the mixing of the ingredient with the diluent,
- means for generating a low pressure zone above the ingredient inlet opening of the mixing chamber, the low pressure generating means comprising means for guiding air across the inlet opening. The perpendicular flow of air vis-A-vis the center axis of the inlet opening generates a Venturi effect sucking off steam or other humidity from the interior of the mixing chamber.

The low pressure generating means can comprise guiding means guiding the air stream through an enlarged section across the ingredient inlet of the mixing chamber. The expansion of the air stream improves the sucking off of steam from the interior of the mixing chamber

The low pressure generating means can comprise guiding means guiding the air stream through a restriction before the air stream reaches the ingredient inlet opening of the mixing chamber.

The air stream generating means may comprise a blowing device for actively generating an air stream.

The air stream generating means can comprise air stream separation means arranged for producing:
- a first partial air stream flowing across the ingredient inlet opening, and
- a second partial air stream directed towards the outlet of an ingredient reservoir and/or ingredient dosing means arranged above the ingredient inlet opening of the mixing chamber.

A funnel can be provided between the reservoir and the ingredient inlet opening of the mixing chamber, wherein at least a portion of the air stream is guided through the funnel. This allows for a drying of the funnel in case inadvertently it has been contaminated with diluent from the mixing chamber arranged below the funnel.

A further aspect of the invention relates to a device for mixing a soluble food or beverage ingredient and a diluent. The device comprises
- a mixing chamber having an inlet for the ingredient, an inlet for injecting the diluent and an outlet for the beverage or comestible food resulting from the mixing of the ingredient with the diluent,
- a reservoir for the ingredient,
- a dosing device for dosing a portion of the ingredients into the mixing chamber,
- air stream generating means, comprising blowing means, designed for generating a stream across the ingredient inlet opening in order to produce a low pressure zone over the ingredient inlet opening, and
- a controller for synchronizing the operation of the blowing means and the operation of the dosing device such that the blowing means are not active when the dosing device allows an ingredient portion drop into the mixing chamber through the ingredient inlet opening.

The inlet for the diluent may be the same opening as for the ingredient. The diluent and the ingredients may be fed to the mixing chamber sequentially.

Alternatively the inlet for the diluent may be arranged separately to the opening as for the ingredient.

Specific embodiments of the present invention will now be described further, by way of example, with reference to the accompanying drawings, in which:
Figure 1 is a schematic view of a beverage production device comprising a device according to the invention;
Figure 2 and 3 illustrate a mixing device with humidity evacuation means according to the present invention.

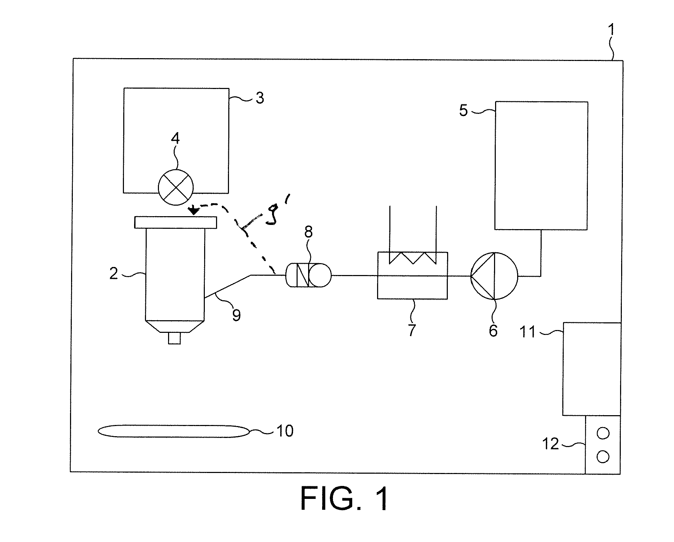

Referring to figure 1, a beverage production apparatus 1 is represented that includes a device 2 of the invention for producing a liquid from ingredient and a diluent entering the device.

Generally the present invention relates to mixing device in which a diluent can be mixed with ingredients.

The invention can also be used with different mixing devices, such as e.g. mixing chambers with mechanical whipping means inside the mixing chamber.

The invention equally finds application with mixing devices producing a non-frothed liquid.

The beverage production apparatus comprises a reservoir of soluble ingredient 3 placed above the device which is coupled with a dosing system 4. The dosing system has the primary function to meter upon request doses of ingredient into the mixing and frothing device 2. The reservoir can be a hopper which is permanent or a disposable package containing the soluble ingredient. The dosing system can be any suitable system such as a dosing screw or a reciprocating dosing piston. The dosing technology is also of course dependent on the nature of the soluble ingredient. The soluble ingredient is typically a dry food powder. However, it could also be a liquid concentrate. The device is fed upon request with ingredient manually or automatically as prompted by a controller 11 and command 12. One can notice that the reservoir and dosing system are optional in the apparatus. Therefore, the device could be fed manually using a scoop, for instance.

A diluent feed circuit is provided in the apparatus to be able to feed the mixing and frothing device 2 with diluent, more particularly, hot water. For that, a water reservoir 5 is provided that can be replenished with fresh water. A water pump 6 transports the diluent from the reservoir 5 to a water heating system 7 such as a thermo block or a cartridge type heater and to eventually a non-return valve 8. The pump can be any type of pump such as a piston pump, diaphragm pump or a peristaltic pump. Finally water is fed into the device by a tube means 9.

As illustrated in figure 1, the mixing and frothing device can be placed directly above a service tray 10 onto which is placed a receptacle to receive the frothed liquid.

A controller 11 can be further provided to coordinate dosing of the soluble ingredient by the dosing system 4 and diluent by the pump 6 upon the user actuating or being prompted to press a command 12 on the apparatus.

The operation of the beverage production apparatus of the invention can be described in an example that follows. A user presses a button of command 12 to activate the apparatus. The controller 11 receives the order from the command 12 and drives the dosing unit 4 according to the choice made by the user. The dosing unit will meter a certain amount of soluble ingredient from the reservoir 3; such amount being delivered in the frothing device of the invention through its upper opening. The soluble ingredient can be agglomerated or non-agglomerated coffee powder for instance. The powder falls by gravity in the bottom of the chamber, Once the powder is in the device, the controller 11 turns the pump 6 on and eventually the heater 7 too if hot water is required. Water mixes with the powder and frothed liquid is so produced. The controller can stop the pump at regular intervals to let the frothed liquid drain, in particular, for larger volumes. Then, the controller 11 turns the pump off. If necessary, the controller further turns the pump on again for delivering a small rinsing water volume to provide the rinsing step. In an alternative, the rinsing step is carried out continuously by a single jet when producing the frothed liquid.

As indicated by the tube means 9 in figure 1, the diluent inlet of the mixing chamber may be arranged separately to the ingredient inlet opening 17.

Alternatively, see reference 9', the diluent and the ingredients may be fed to the mixing chamber through the same inlet opening, preferably in a time sequential manner.

In any case, the invention may be applied to any type of mixing chamber and is not limited to the shown embodiments of a mixing chamber.

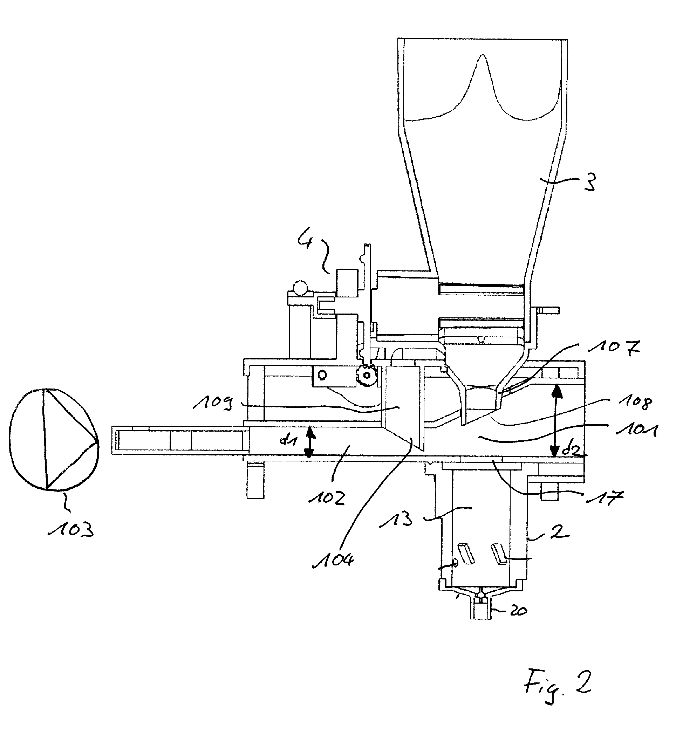

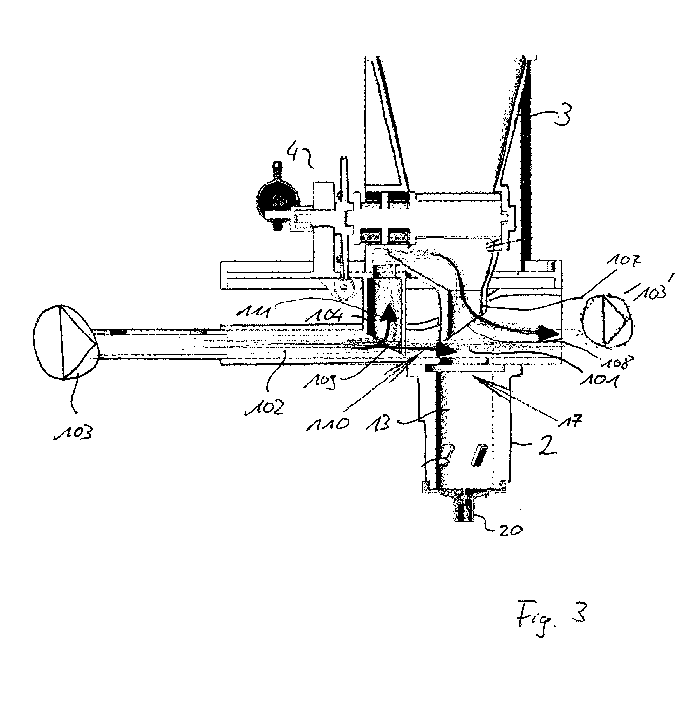

With reference to figures 2 and 3 it will now be explained how humidity inside the mixing chamber and/or in an ingredient path between the dosing device and the ingredient inlet opening 17 of the mixing chamber 13 can be evacuated.

Generally the invention proposes to generate a low pressure zone outside the ingredient inlet opening 17 of the mixing chamber 13. "Low pressure zone" is to be understood as a zone in which the pressure is lower than inside the mixing chamber 13. This causes a stream of gas or steam from the interior of the mixing chamber 13 through the ingredient inlet opening 17 and into the low pressure zone.

This can be achieved e.g. by actively blowing air from a blower 103 horizontally across the ingredient inlet opening 17. This will create a low pressure zone causing an evacuating stream leaving the mixing chamber through the inlet opening 17 before getting sucked away by the horizontal air stream. Therefore, in case there is humidity remaining in the mixing chamber 13, e.g. in form of moist ingredients, the pressure reduction will promote the evaporation of the humidity which will then be sucked off the mixing chamber 13 as steam.

In the example the low pressure zone is produced using blower means. It is to be understood that the same effect can be achieved by additionally or alternatively sucking in air at the other side of the blower means, such that the air will not (only) be pushed, but drawn across the ingredient outlet opening 17. Such sucking means are referenced wit the numeral 103' in figure 3.

In the depicted example the blower 103 actively blows air from outside towards the inlet opening 17 through air guiding means. The air guiding means can present a channel 102 with restricted cross-section (diameter d1 in Figure 2) thus accelerating the air stream in this area. The restricted channel 102 is followed by an expansion zone 101 with enlarged cross-section (diameter d2 in Figure 2) above the inlet opening 17. Thus, when horizontally blowing air across the inlet opening 17 in the expansion zone 101, the pressure in the expansion zone 101 will be lower than the pressure inside the mixing chamber 13, which in turn will promote the evacuation of humidity inside the mixing chamber 13 as steam or vapor. The air will leave the expansion zone 101 at the side of the inlet opening 17 which is opposed to the active blowing means 103.

Using this air stream drying, the interior of the mixing chamber can thus be dried preferably during periods in which no ingredient is dosed into the mixing chamber 13. To this regard the controller 11 of Figure 1 will be designed to control the operation of the blowing means 103, the liquid injection means and the dosing device 4 in a synchronized manner. The blowing means 103 thus will preferably be activated when a mixture of diluent and ingredients has been drained through the outlet opening 20 of the mixing chamber and before a new dose of ingredient is allowed to drop into the mixing chamber 13.

Alternatively the blowing means 103 are activated during the periods during which the diluent injection through the diluent inlet 23 is active.

A second partial air stream 111 can be derived from the primary air stream 110 by means of air stream splitting means 104. The air stream splitting means 104 can present an inlet edge 109 being inclined in an acute angle of e.g. some 45° relative to the flow direction of the air stream. The air stream splitting means 104 produce the secondary air stream 111 which is guided towards the dosing means 4 in order to dry the area of the dosing means 4. This secondary air stream 111 then is guided vertically downwards through the funnel 107 through which - although in periods during which there is no secondary air stream present - the dosed ingredient falls from the dosing device 4 to the inlet opening 17 of the mixing chamber 13. Thus also the interior of the funnel 107 will be dried, which drying will be promoted by the fact that the secondary air stream 111 will be accelerated in the lower, narrower section of the funnel 107.

The exit of the funnel 107 can present a slanted edge 108 promoting the horizontal redirection of the vertical air stream through the funnel 107 such that the secondary air stream 111 will smoothly mix with the primary air stream guided 110 directly across the inlet opening 17 of the mixing chamber 13.

The secondary air stream thus will be guided in a U-shaped path before joining again the primary stream 110 which directly arrives in the expansion zone 101 over the inlet opening 17. The secondary air stream thus can be guided in a first leg perpendicularly away from the primary stream 110, in a second leg essentially parallel to the primary air stream 110, and in a third leg in a right angle back to the intersection with the primary air stream 110.

Note that also the system having a primary and a derived secondary air stream can be achieved not only by blowing means, but also by sucking means drawing both air streams (see reference 103' in Figure 21).

The above embodiments have been described by way of example only. Many other embodiments falling within the scope of the accompanying claims will be apparent to the skilled reader.

## Claims

1. A device for mixing a soluble food or beverage ingredient and a diluent, the device comprising
- a mixing chamber (13) having an inlet opening (17) for the ingredient, an inlet for the diluent and an outlet for the beverage or comestible food resulting from the mixing of the ingredient with the diluent,
- means for generating a low pressure zone above the ingredient inlet opening (17) of the mixing chamber (13),
the low pressure generating means comprising means for guiding an air stream across the inlet opening (17).

2. The device according to claim 1,
wherein the air guiding means are arranged for guiding the air in a flow direction perpendicular to the center axis of the inlet opening (17), such that steam or other humidity from the interior of the mixing chamber (13) is sucked off through the ingredient inlet opening (17).

3. The device according to any of the preceding claims;
wherein the low pressure generating means comprise means for guiding the air stream through an enlarged section (101) across the ingredient inlet of the mixing chamber (13).

4. The device according to any of the preceding claims,
wherein the low pressure generating means can comprise guiding means guiding the air stream through a restriction before the air stream reaches the ingredient inlet opening (17) of the mixing chamber (13).

5. The device according to any of the preceding claims,
wherein the air stream generating means comprise a blowing device (103) and/or a sucking device (103') for actively generating an air stream.

6. The device according to any of the preceding claims,
wherein the air stream generating means comprise air stream separation means arranged for producing:
- a first partial air stream (110) flowing across the ingredient inlet opening (17), and
- a second partial air stream (111) directed towards the outlet of an ingredient reservoir (3) and/or ingredient dosing means (4) arranged above the ingredient inlet opening (17) of the mixing chamber (13).

7. The device according to any of the preceding claims,
wherein a funnel (107) is provided between the reservoir and the ingredient inlet opening (17) of the mixing chamber (13), wherein at least a portion of the air stream is guided through the funnel (107).

8. A device for mixing a soluble food or beverage ingredient and a diluent,
wherein the device comprises
- a mixing chamber (13) having an inlet opening (17) for the ingredient, an inlet (18) for injecting the diluent and an outlet (20) for the beverage or comestible food resulting from the mixing of the ingredient with the diluent,
- a reservoir (3) for the ingredient,
- a dosing device (4) for dosing a portion of the ingredients into the mixing chamber (13),
- air stream generating means, comprising blowing means, designed for generating an stream across the ingredient inlet opening (17) in order to produce a low pressure zone over the ingredient inlet opening (17), and
- a controller (11) for synchronizing the operation of the blowing means and the operation of the dosing device such that the blowing means are not active when the dosing device allows an ingredient portion drop into the mixing chamber (13) through the ingredient inlet opening (17).

9. The device according to any of the preceding claims,
wherein the inlet for the diluent is the same opening (17) as for the ingredient.

10. The device according to claims 1 to 8,
wherein the inlet for the diluent is arranged separately to the opening (17) as for the ingredient.

11. A method for evacuating humidity in a device for mixing a soluble food or beverage ingredient and a diluent, the device comprising
- a mixing chamber (13) having an inlet opening (17) for the ingredient, an inlet for the diluent and an outlet for the beverage or comestible food resulting from the mixing of the ingredient with the diluent, the method comprising the step of
- generating a low pressure zone above the ingredient inlet opening (17) of the mixing chamber (13), the low pressure being produced by guiding an air stream across the inlet opening (17).

12. The method according to claim 11,
wherein the air is guided in a flow direction perpendicular to the center axis of the inlet opening (17), such that steam or other humidity from the interior of the mixing chamber (13) is sucked off through the ingredient inlet opening (17).

13. The method according to claim 11 or 12,
wherein the air is guided through an enlarged section across the ingredient inlet of the mixing chamber (13).

14. The method according to claim 11, 12 or 13,
wherein the air stream through a restriction before the air stream reaches the ingredient inlet opening (17) of the mixing chamber (13).

15. The method according to any of claims 11 to 14,
wherein the air stream is actively generated.

16. The method according to any of claims 11 to 15,
wherein the air stream is divided into
- a first partial air stream flowing across the ingredient inlet opening (17), and
- a second partial air stream directed towards the outlet of an ingredient reservoir and/or ingredient dosing means arranged above the ingredient inlet opening (17) of the mixing chamber (13).

17. The method according to any of claims 11 to 16,
wherein at least a portion of the air stream is guided through the funnel provided below an ingredient reservoir and over the ingredient inlet opening (17) of the mixing chamber (13).

18. A method for evacuating humidity in a device for mixing a soluble food or beverage ingredient and a diluent, the device comprising
- a mixing chamber (13) having an inlet for the ingredient, an inlet for injecting the diluent and an outlet for the beverage or comestible food resulting from the mixing of the ingredient with the diluent,
- a reservoir for the ingredient,
- a dosing device for dosing a portion of the ingredients into the mixing chamber (13),
comprising the step of:
- actively generating an stream across the ingredient inlet opening (17) in order to produce a low pressure zone over the ingredient inlet opening (17),
wherein the air stream is not generated in periods in which dosed ingredient drops into the mixing chamber (13) through the ingredient inlet opening (17).

## Amended claims

### Amended claims in accordance with Rule 137(2) EPC.

**1.** A device for mixing a soluble food or beverage ingredient and a diluent, wherein the device comprises
- a mixing chamber (13) having an inlet opening (17) for the ingredient, an inlet (18) for injecting the diluent and an outlet (20) for the beverage or comestible food resulting from the mixing of the ingredient with the diluent,
- a reservoir (3) for the ingredient,
- a dosing device (4) for dosing a portion of the ingredients into the mixing chamber (13),
- air stream generating means, comprising blowing means, designed for generating an air stream across the ingredient inlet opening (17) in order to produce a low pressure zone over the ingredient inlet opening (17),
**characterized in that**
said device further comprises a controller (11) for synchronizing the operation of the blowing means and the operation of the dosing device such that the blowing means are not active when the dosing device allows an ingredient portion drop into the mixing chamber (13) through the ingredient inlet opening (17).

**2.** The device according to claim 1,
wherein the air stream generating means are arranged for guiding the air in a flow direction perpendicular to the center axis of the inlet opening (17), such that steam or other humidity from the interior of the mixing chamber (13) is sucked off through the ingredient inlet opening (17).

**3.** The device according to any of the preceding claims,
wherein the air stream generating means comprise means for guiding the air stream through an enlarged section (101) across the ingredient inlet of the mixing chamber (13).

**4.** The device according to any of the preceding claims,
wherein the air stream generating means can comprise guiding means guiding the air stream through a restriction before the air stream reaches the ingredient inlet opening (17) of the mixing chamber (13).

**5.** The device according to any of the preceding claims,
wherein the air stream generating means comprise a blowing device (103) and/or a sucking device (103') for actively generating an air stream.

**6.** The device according to any of the preceding claims,
wherein the air stream generating means comprise air stream separation means arranged for producing:
- a first partial air stream (110) flowing across the ingredient inlet opening (17), and
- a second partial air stream (111) directed towards the outlet of an ingredient reservoir (3) and/or ingredient dosing means (4) arranged above the ingredient inlet opening (17) of the mixing chamber (13).

**7.** The device according to any of the preceding claims,
wherein a funnel (107) is provided between the reservoir and the ingredient inlet opening (17) of the mixing chamber (13), wherein at least a portion of the air stream is guided through the funnel (107).

**8.** The device according to any of the preceding claims,
wherein the inlet for the diluent is the same opening (17) as for the ingredient.

**9.** The device according to claims 1 to 8,
wherein the inlet for the diluent is arranged separately to the opening (17) as for the ingredient.

**10.** A method for evacuating humidity in a device for mixing a soluble food or beverage ingredient and a diluent, the device comprising
- a mixing chamber (13) having an inlet for the ingredient, an inlet for injecting the diluent and an outlet for the beverage or comestible food resulting from the mixing of the ingredient with the diluent,
- a reservoir for the ingredient,
- a dosing device for dosing a portion of the ingredients into the mixing chamber (13), comprising the step of:
- actively generating an air stream across the ingredient inlet opening (17) in order to produce a low pressure zone over the ingredient inlet opening (17),
**characterized in that**
the air stream is not generated in periods in which dosed ingredient drops into the mixing chamber (13) through the ingredient inlet opening (17).

**11.** The method according to claim 10,
wherein the air is guided in a flow direction perpendicular to the center axis of the inlet opening (17), such that steam or other humidity from the interior of the mixing chamber (13) is sucked off through the ingredient inlet opening (17).

**12.** The method according to claim 10 or 11,
wherein the air is guided through an enlarged section across the ingredient inlet of the mixing chamber (13).

**13.** The method according to claim 10, 11 or 12,
wherein the air stream through a restriction before the air stream reaches the ingredient inlet opening (17) of the mixing chamber (13).

**14.** The method according to any of claims 10 to 13,
wherein the air stream is actively generated.

**15.** The method according to any of claims 10 to 14,
wherein the air stream is divided into
- a first partial air stream flowing across the ingredient inlet opening (17), and
- a second partial air stream directed towards the outlet of an ingredient reservoir and/or ingredient dosing means arranged above the ingredient inlet opening (17) of the mixing chamber (13).

**16.** The method according to any of claims 10 to 15,
wherein at least a portion of the air stream is guided through the funnel provided below an ingredient reservoir and over the ingredient inlet opening (17) of the mixing chamber (13).
